Europäisches Patentamt

European Patent Office

Office européen des brevets

(19)

(11) Publication number: 0 484 826 A1

# EUROPEAN PATENT APPLICATION

(21) Application number: 91118588.2

(22) Date of filing: 31.10.91

(51) Int. Cl.5: C08C 2/04, C08C 2/06

(30) Priority: 02.11.90 JP 295400/90
02.11.90 JP 295401/90

(43) Date of publication of application:
13.05.92 Bulletin 92/20

(84) Designated Contracting States:
BE DE FR GB IT

(71) Applicant: UBE INDUSTRIES, LTD.
12-32, Nishihonmachi 1-chome
Ube-shi, Yamaguchi(JP)

(72) Inventor: Tsujimoto, Nobuhiro

3-22-45-207, Nishi-Kasai
Edogawa-ku, Tokyo(JP)
Inventor: Maeda, Koji
4-29-8, Midorigaoka
Mobara-shi, Chiba(JP)
Inventor: Tanaka, Kazuyuki
Ube-Kohsan Yamagi-Ryo, 44-3, Yamagi
Ichihara-shi, Chiba(JP)

(74) Representative: Hoeger, Stellrecht & Partner
Uhlandstrasse 14 c
W-7000 Stuttgart 1(DE)

(54) Method of post-treating polybutadiene solution.

(57) A method of post-treating a polybutadiene solution, comprising:
(A) adding water to a polybutadiene solution,
(B) injecting the polybutadiene solution into a water phase in a deashing layer, and
(C) separating the polybutadiene solution into a water phase and a polymerization solvent phase and removing the water phase to deash the polybutadiene solution.

Fig. 2

BACKGROUND OF THE INVENTION

1. Field of the Invention

The present invention relates to a process of post-treating or concentrating a polybutadiene solution produced by a solution polymerization of 1,3-butadiene.

2. Description of the Related Art

The post-treating process of the present invention is particularly suitable for use in decomposing and removing catalyst from polybutadiene solution in the process of solution polymerization of 1,3-butadiene in the presence of a Ziegler-Natta catalyst or an organolithium catalyst.

Polybutadiene is usually produced by a solution polymerization of 1,3-butadiene, and in this case, a Ziegler-Natta catalyst and an organolithium catalyst are used as the catalyst.

Upon achieving the desired degree of conversion, the polybutadiene solution is washed with water to decompose and to remove the catalyst. After that the salutation is concentrated and devolatized to recover the polybutadiene.

The above-described Ziegler-Natta catalyst and organolithium catalyst are easily decomposed by water, to give a water soluble compound, and accordingly, water is added to a polybutadiene polymer solution, the mixture is washed with water, and the water layer is then removed.

Conventionally, the decomposition and the removal of catalyst is proceeded by means of adding water to the polybutadiene solution and allowing to stand the resultant mixture, but this process has the following problems. Namely, when a mixture of polybutadiene solution and water is merely allowed to stand, the separation of the water layer from the polymerization solvent layer is poor, i.e., not only does the separation take much time but also the water is not completely removed from the polybutadiene polymer solution.

On the other hand, in the devolatizing treatment of the polybutadiene solution, it is a common practice to first concentrate the polybutadiene solution (i.e., to conduct a primary concentration) to a polybutadiene concentration of 20 to 40% by weight, and then remove the solvent by a devolatizing extruder.

Conventionally, a single-stage or multi-stage flash evaporation method is used for the primary concentration, but in this method, the viscosity of the polybutadiene solution is generally rapidly increased with an increase of the polybutadiene concentration, and this has led to a problem in that, in the conventional single-stage or multi-stage flash evaporation method, an increase in the polybutadiene concentration lowers the devolatizing efficiency.

SUMMARY OF THE INVENTION

Accordingly, the objects of the present invention are to eliminate the above-mentioned disadvantages of the prior art and to provide a post-treatment method by which a water phase is completely removed from a polybutadiene solution-water mixture.

Another object of the present invention is to provide a method of preliminarily concentrating a polybutadiene solution, by which the problem of a lowering of the devolatizing efficiency due to an increase of the solution viscosity with the increase of polybutadiene concentration in the polybutadiene solution is eliminated.

A further object of the present invention is to provide a concentration method superior to the conventional single-stage or multi-stage flash evaporation method from the viewpoint of an efficient use of energy.

Other objects and advantages of the present invention will be apparent from the following description.

In accordance with the present invention, there is provided a process of decomposing and removing catalyst in a polybutadiene solution, comprising:

(a) adding water to a polybutadiene solution,

(b) injecting the mixture of polybutadiene solution and water into the water layer in a deashing vessel to separate the mixture into the polybutadiene solution into a water phase and a polymerization solvent phase and removing the water phase to remove the decomposed catalyst.

In accordance with the present invention, there is also provided a process to concentrate the catalyst-removed polybutadiene solution, wherein the polybutadiene solution is

(d) introduced into a polybutadiene lean layer in a concentrating vessel tank to thereby separate the polybutadiene solution into a polybutadiene lean layer (upper layer) and a polybutadiene rich layer (lower layer), to thereby obtain a polybutadiene rich solution.

In accordance with the present invention, there is further provided a method of concentrating a polybutadiene polymer solution comprising:

(a) heating a polybutadiene solution to a temperature that will cause a phase separation, to cause a phase separation and thereby separate said polybutadiene solution into a polybutadiene lean phase and a polybutadiene rich phase and

(b) concentrating the polybutadiene lean phase and then adding the concentrate to the polybutadiene rich phase.

BRIEF DESCRIPTION OF THE DRAWINGS

The present invention will be better understood from the description set forth below with reference to the accompanying drawings, in which:

Figure 1 is a phase diagram showing the relationship between the polybutadiene concentration and the critical temperature with respect to a solution of polybutadiene in a $C_4$ solvent composed mainly of cis-2-butene;

Figure 2 is a flow chart showing an embodiment of the post-treatment process according to the present invention; and

Figure 3 is a flow chart showing another embodiment of the concentrating process according to the present invention.

DESCRIPTION OF THE PREFERRED EMBODIMENTS

In the polybutadiene solution, aromatic hydrocarbons such as benzene, toluene and xylene, aliphatic hydrocarbons such as heptane and n-hexane, alicyclic hydrocarbons such as cyclopentane and cyclohexane, or $C_4$ fractions composed mainly of cis-2-butene are generally used as the solvent.

These polybutadiene solutions exhibit a transparent and homogeneous appearance at a temperature below the critical temperature. At a given temperature (critical temperature) or higher, the polybutadiene polymer solutions separate into a layer having a high polybutadiene concentration, i.e., a polybutadiene rich layer and a layer having a low polybutadiene concentration, namely, a polybutadiene lean layer. In the polybutadiene rich layer, not only is the polybutadiene concentration high but also the molecular weight of polybutadiene contained therein is high. The polybutadiene lean layer is a dilute solution of a low molecular weight polybutadinene.

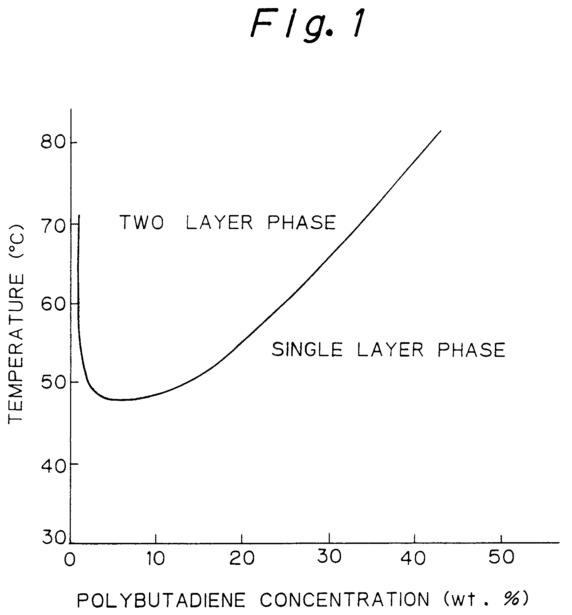

The term "critical temperature" as used herein is intended to mean a temperature at which the polybutadiene solution separates into two layers, and this temperature depends upon the pressure, the kind and composition of the solvent, and the concentration and molecular weight of polybutadiene. The relationship between the polybutadiene concentration and the critical temperature with respect to a solution of polybutadiene in a polymerization solvent comprising a $C_4$ solvent composed mainly of cis-2-butene is shown as and example in Fig. 1.

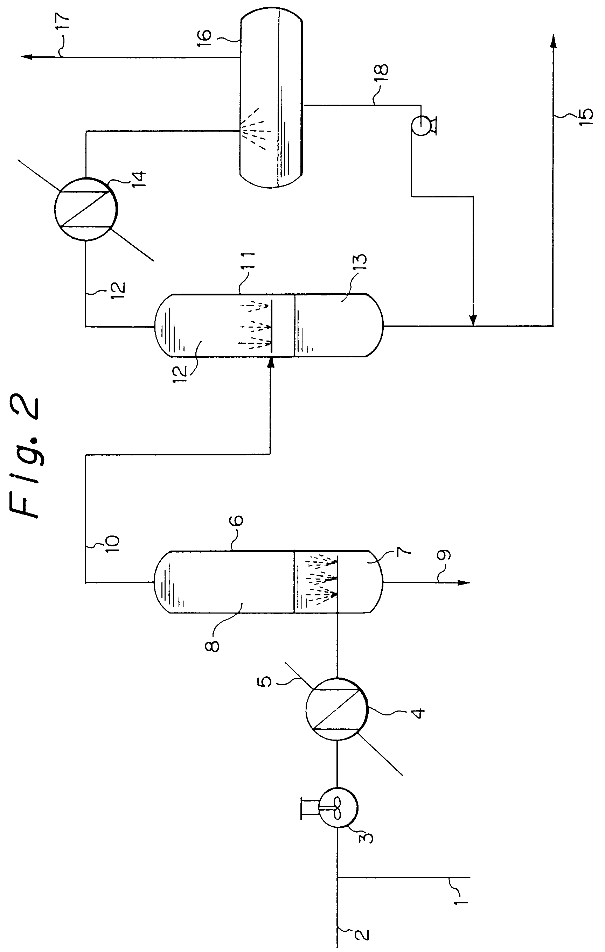

The first embodiment of the present invention will now be described with reference to the process flow diagram of Fig. 2.

First, water 1 is added and mixed with a polybutadiene solution 2, to decompose the catalyst, this mixing can be conducted by using a mixer or an agitator 3, or the like. The addition of water 1, to the polybutadiene solution 2 causes the catalyst to decompose and migrate to the water phase. The amount of water 1 added to the polybutadiene solution 2 is preferably in the range of from 10 to 40% by volume, based on the polybutadiene solution 2. In this case, the temperature of the polybutadiene solution 2 is preferably lower than the critical temperature, i.e., is a temperature at which the polybutadiene solution does not separate into two layers, because at such a temperature the catalyst comes into full contact with water and is completely decomposed.

Subsequently, the polybutadiene solution 2 is passed through a heat exchanger 4 (5: steam) and injected into a water layer 7 in a catalyst-removing vessel 6, to thereby separate the polybutadiene solution into a polymerization solvent layer 8 and a water layer 7. In this case, the temperature of the polymer solution 2 is preferably the critical temperature or above, i.e., is a temperature at which the polybutadiene solution separates into two phases, because the water can be easily separated at this critical temperature or above. When the temperature of the polybutadiene solution is too high, however, the viscosity of the polybutadiene rich phase becomes so high that the catalyst in the solution neither decompose well nor is removed completely. Accordingly, the temperature is most preferably in the range of from the critical temperature to a temperature of 20°C higher than the critical temperature.

The polybutadiene solution 8 obtained by separating the water layer 7 in the vessel 6, to remove the catalyst, is subjected to a primary concentration and the solvent is then removed by a devolatizing extruder or the like, to thus obtain the polybutadiene.

The phase separation can be utilized in the primary concentration. Specifically, it is possible to use a method such as that wherein the polybutadiene solution is introduced at the critical temperature or higher into a polybutadiene lean layer in a phase separation vessel 11, to thereby separate the polybutadiene solution 10 into a polybutadiene lean layer (upper layer) 12 and a polybutadiene rich layer (lower layer) 13. In this case, the polybutadiene lean layer 12 is a low molecular weight polybutadiene solution, and the polybutadiene rich layer 13 is a polybutadiene solution having a polybutadiene concentration as high as 20 to 40% by weight. The polybutadiene lean layer 12 may be discarded outside the system, or according to need, it may be concentrated at, for example, an evaporation vessel 16 to remove the polymerization solvent and the unreacted 1,3-polybutadiene 17, and then the residue 18 is returned to the polybutadiene rich layer 13 (15: the concentrated polybutadiene solution).

It is also possible to conduct the primary concentration of the polybutadinene solution by known methods, such as a flash evaporation, besides the above-described method.

The post-treatment method of the present invention can be applied to polybutadiene solutions wherein aromatic hydrocarbon solvents such as benzene, toluene and xylene, aliphatic hydrocarbon solvents such as butane, heptane and n-hexane, olefinic hydrocarbon solvents such as butene, or mixtures of these solvents are used as the polymerization solvent. The method of the present invention can be particularly advantageously applied to a polybutadiene solution wherein the polymerization solvent is a $C_4$ fraction which is a hydrocarbon mixture composed mainly of cis-2-butene.

In the second embodiment of the present invention, the polybutadiene solution is heated to the critical temperature or higher to separate it into a polybutadiene rich layer and a polybutadiene lean layer through the use of the above-described properties of the polybutadiene solution. The polybutadiene lean layer is then concentrated and added to the polybutadiene rich phase, instead of being returned to the polymerization vessel.

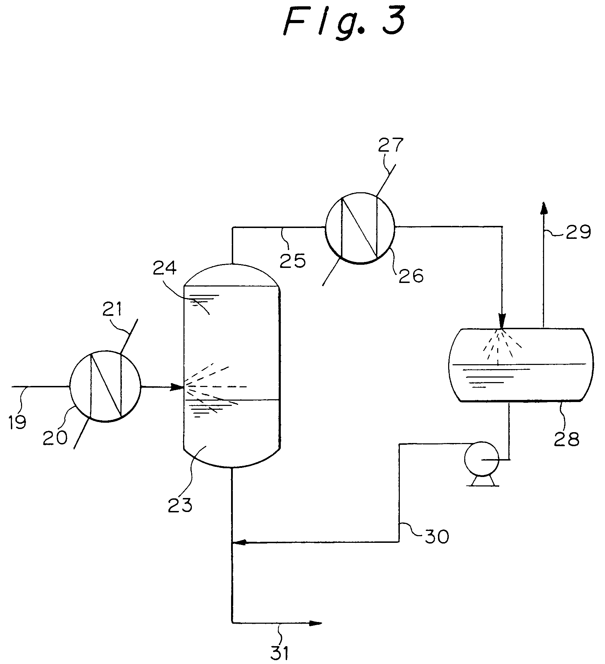

Figure 3 is a process flow diagram showing one embodiment of process flow according to the concentrating process of the present invention, and the present invention will now be described with reference to this process flow diagram.

First, a polybutadiene solution 19 is heated to the critical temperature or above by a heat exchanger 20 or the like (21: steam), and the polymer solution 19 is then introduced into a separation vessel 22 and is separated into a polybutadiene lean layer (upper layer) 24 and a polybutadiene rich layer (lower phase) 23. In this case, the polymer solution 19 is preferably introduced into the polybutadiene lean layer 24 because, compared with the polybutadiene rich layer 23, the solution viscosity of the polybutadiene lean layer 24 is so low that the polymer solution 19 can be more easily separated. The polybutadiene concentration and temperature of the polybutadiene solution and the pressure in the phase separation vessel 22 are preferably selected so that the polybutadiene concentration of the polybutadiene rich layer 23 is about 20 to 40% by weight. In the phase separation, in general, the higher the temperature of the polybutadiene solution, the higher the polybutadiene concentration of the polybutadiene rich layer and the higher the proportion of the polybutadiene lean layer.

Subsequently, the polybutadiene lean layer 25 as the upper layer is taken outside the phase separation vessel 22, concentrated to a polybutadiene concentration of about 20 to 40% by weight, and added to the polybutadiene rich layer 23. This contributes to a reduction in the loss of polybutadiene. Since the polybutadiene lean layer 25 is a solution of a low molecular weight polybutadiene, the viscosity of the polybutadiene lean layer does not become high even when the layer is concentrated. Therefore, the concentration of the polybutadiene lean layer 25 can be efficiently conducted also when using the conventional evaporation vessel 28.

That is, the polybutadiene lean layer 25 is introduced, through a heat exchanger 26 (27: steam), to an evaporation vessel 28, where the unreacted 1,3-butadiene and the polymerization solvent 29 are removed and the concentrated polybutadiene phase 30 is returned to the separation vessel 22. The concentrated polybutadiene solution 31 is recovered from the bottom of the separation vessel 22.

After the polybutadiene lean layer is concentrated and added to the polybutadiene rich layer, the concentration operation can be further conducted by a devolatizing extruder or the like, to remove the solvent and thereby obtain the polybutadiene.

The concentration method of the present invention can be applied to polybutadiene solutions wherein aromatic hydrocarbons such as benzene, toluene and xylene, aliphatic hydrocarbons such as heptane and n-hexane, alicyclic hydrocarbons such as cyclopentane and cyclohexane, and $C_4$ fractions mainly composed of cis-2-butene are used as the polymerization solvent. Further, in the above-described polybutadiene solutions, the polymerization solvent may be a mixture of the above-described solvents. Among the above-described polybutadiene solutions, the polymer solutions wherein $C_4$ fractions composed mainly of cis-2-butene are used as the polymerization solvent are particularly preferred. The is because, in the polymer solutions wherein $C_4$ fractions are used as the polymerization solvent, the phase separation occurs at a relatively low temperature. Among the $C_4$ fractions, a $C_4$ fraction consisting essentially of cis-2-butene and trans-2-butene is particularly preferred.

The polybutadiene concentration before the concentrating process is preferably in the range of from 5 to 30% by weight.

In the post-treatment method of the present invention, a polybutadiene solution subjected to a decomposition of a polymerization catalyst through the addition of water is injected through a nozzle or the like into a water phase in a catalyst-removing vessel at a temperature that will cause a phase separation, which enables the solution to be satisfactorily separated into water layer and polymerization solvent layer in a short time, and therefore, the time taken for decomposing and removing the catalyst can be significantly shortened. Further, the utilization of a phase separation for a primary concentration after removing the catalyst enables the polybutadiene solution to be effectively concentrated even when the viscosity of the polybutadiene solution is high.

In the concentration process of the present invention, a polybutadiene solution is separated into a polymer rich layer and a polymer lean layer by a phase separation.

Therefore, compared with the conventional concentration method wherein a primary concentration is conducted by the flash method, the method of the present invention is free from the problem of a lowering of the devolatizing efficiency derived from an increase in the solution viscosity accompanying the concentration, and has a superior energy efficiency, and thus it is possible to obtain a concentrated polybutadiene solution with a high efficiency.

Further, since the polybutadiene lean phase is concentrated and added to a polymer rich phase without being returned to the polymerization tank, no loss of polybutadiene occurs.

EXAMPLES

The present invention will now be further illustrated by, but is by no means limited to, the following Examples.

Example 1

A cobalt octoate-water-diethyl aluminum monochloride catalyst and 1,2-butadiene were added to a 1,3-butadiene solution comprising 30% by weight of 1,3-butadiene 56% by weight of cis-2-butene and 13% by weight of trans-2-butene with the balance consisting of n-butane, propane, and ethane, and a polymerization of 1,3-butadiene was then conducted. After the polymerization, 2,6-tert-butylphenol and water were added to the system to stop the polymerization, to thereby obtain a polybutadiene solution. The polybutadiene concentration of the polybutadiene solution was 16% by weight. The Mooney viscosity and cis-1,4 bond content of the polybutadiene were 43 and 98.5%, respectively, and the critical temperature of the polybutadiene solution was 48°C.

Water was mixed into the polybutadiene solution in an amount of 3 liters per 10 liters of the polybutadiene solution, by using a mixer. In this case, the temperature was kept at 40°C, to avoid the phase separation.

The polybutadiene solution was then heated to 60°C by a heat exchanger, and injected into a water phase in a catalyst-removing vessel having an internal capacity of 20 liters and an internal temperature of 60°C. The amount injected of the heated polybutadiene solution was 13 liters/hr. This caused the polybutadiene solution to be separated into a polymerization solvent layer as the upper layer and a water layer as the lower layer, and the polymerization solvent layer was further separated into two layers, i.e., a polybutadiene lean layer and a polybutadiene rich layer.

The polymerization solvent layer was taken out of the catalyst-removing vessel and fed into a polybutadiene lean layer in a phase separation vessel having an internal capacity of 10 liters. The phase separation vessel was maintained at a temperature of 70°C and a pressure of 9 kgf/cm$^2$A.

In the phase separation vessel, the polymerization solvent layer separated into a polybutadiene lean layer and a polybutadiene rich layer of a ratio of 58 : 42. The polybutadiene concentration of the polybutadiene lean layer and the polybutadiene concentration of the polybutadiene rich layer were 1.5% by weight and 33% by weight, respectively.

The polybutadiene lean layer was taken out of the phase separation vessel at a rate of 5.8 liters/hr and passed through a heat exchanger, and the 1,3-butadiene and the solvent were removed through evaporation in an evaporation vessel, to give a solution having a polybutadiene concentration of 33%. This solution was then mixed, at a rate of 0.2 liter/hr, with the polybutadiene rich vessel, at a rate of 4.2 liters/hr, to obtain a concentrated polybutadiene solution.

The polymerization solvent and the unreacted 1,3-butadiene were removed from the concentrated polybutadiene solution by a devolatizing extruder, to thereby obtain polybutadiene.

The ash content of the polybutadiene was 0.03% by weight.

Example 2

A cobalt octoate-water-diethyl aluminum monochloride catalyst and 1,2-butadiene as a molecular weight modifier were added to a 1,3-butane solution comprising 30% by weight of 1,3-butadiene, 56% by weight of cis-2-butene and 13% by weight of trans-2-butene with the balance consisting of n-butane, propane, and ethane, and a polymerization of 1,3-butadiene was then conducted. After the polymerization, 2,6-tert-butylphenol and water were added to the system to stop the polymerization, to thereby obtain a polybutadiene solution. The polybutadiene concentration of the polybutadiene solution was 16% by weight. The Mooney viscosity and cis-1,4 bond content of the polybutadiene were 43 and 98.5%, respectively, and the critical temperature of the polybutadiene polymer solution was 51°C.

The polybutadiene polymer solution was passed through a heat exchanger at a rate of 10 liters/hr, to be heated to 60°C, and fed into a polybutadiene lean layer in a phase separation vessel having an internal capacity of 10 liters and kept at an internal temperature of 60°C and an internal pressure of 7 kgf/cm$^2$A.

In the separation tank, the polybutadiene polymer solution was separated into a polybutadiene lean layer and a polybutadiene rich layer at a ratio of 40 : 60. The polybutadiene concentration of the polybutadiene lean layer and the polybutadiene concentration of the polybutadiene rich layer were 1.3% by weight and 25% by weight, respectively.

The polybutadiene lean layer was taken out of the upper layer in the phase separation vessel at a rate of 4 liters/hr, heated through a heat exchanger, and concentrated to a polybutadiene concentration of 25% by weight in an evaporation vessel. The concentrate was taken out of the evaporation vessel at a rate of 0.2% liter/hr and added to the polybutadiene rich layer, taken out of the phase separation vessel at a rate of 6 liters/hr, to give a concentrated polybutadiene solution having a polybutadiene concentration of 25% by weight at rate of 6.2 liters/hr.

Example 3

The same polybutadiene solution as that used in Example 2 was passed through a heat exchanger at a rate of 10 liters/hr, to heat the polybutadiene solution to 70°C, and fed into a polybutadiene lean layer in a separation tank having an internal capacity of 10 liters and kept at an internal temperature of 70°C and an internal pressure of 9 kgf/cm$^2$A.

In the phase separation tank, the polybutadiene solution was separated into a polybutadiene lean layer and a polybutadiene rich layer in a ratio of 58 : 42. The polybutadiene concentration of the polybutadiene lean layer and the polybutadiene concentration of the polybutadiene rich layer were 1.5% by weight and 33% by weight, respectively.

The polybutadiene lean layer was taken out of the upper layer in the phase separation vessel at a rate of 5.8 liters/hr, heated through a heat exchanger, and concentrated to a polybutadiene concentration of 33% by weight in an evaporation vessel. The concentrate was taken out of the evaporation vessel at a rate of 0.2 liter/hr and added to the polybutadiene rich layer, taken out of the phase separation tank at a rate of 4.2 liters/hr, to give a concentrated polybutadiene solution having a polybutadiene concentration of 33% by weight at rate of 4.4 liters/hr.

**Claims**

1.  A process of decomposing and removing catalyst from a polybutadiene solution after polymerization in the process of solution polymerization of 1,3-butadiene, comprising the steps of:

    (a) adding water to a polybutadiene solution to decompose a catalyst in the polybutadiene solution; and
    (b) injecting the mixture of water and the polybutadiene solution into the water layer in a catalyst-removing vessel to separate the solution into water layer and polymerization solvent layer.

2.  A process of concentrating a polybutadiene solution and removing solvent and unreacted 1,3-butadiene, comprising the process of:

    (a) introducing the polybutadiene solution into a polybutadiene lean layer in a concentrating vessel to separate the polybutadiene solution into polybutadiene lean layer (upper layer) and polybutadiene rich layer (lower layer), at the temperature wherein the solution separates into two layers;
    (b) taking out the upper layer from the vessel; and
    (c) concentrating and evaporating the lower layer to remove the solvent and unreacted 1,3-butadiene.

3.  A process as claimed in claim 2, wherein the upper layer is taken out and is concentrated to be returned to the lower layer.

4.  A process of treating a polybutadiene solution after polymerization in the process of solution polymerization of 1,3-butadiene, which comprises the process of claim 1 and the process of claim 2 or 3.

5.  The process as claimed in claim 1 or 4, wherein the step (a) of said process of claim 1 is carried on at a temperature in which the polybutadiene solution does not separate into two layers.

6. The process of claim 1 or 4, wherein the step (b) of the process of claim 1 is carried on at a temperature in which the polybutadiene solution separates into two layers.

7. The process as claimed in any one of claims 2 to 4, wherein the process of claim 2 is carried on at a temperature in which the polybutadiene solution separates into two layers.

8. The process of any one of claims 1 to 7, wherein the solvent is a $C_4$ fraction mainly comprising cis-2-butene.

# F l g. 1

Fig. 2

EP 0 484 826 A1

# F I g. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 444 922 (T.G.GUTOWSKI)<br>* claims 1,9-10 *<br>--- | 2-3,7 | C08C2/04<br>C08C2/06 |
| A | FR-A-1 505 453 (CHEMISCHE WERKE HÜLS AKTIENGESELLSCHAFT)<br>* "Résumé" *<br>----- | 1 | |
| | | | TECHNICAL FIELDS SEARCHED (Int. Cl.5) |
| | | | C08C |

The present search report has been drawn up for all claims

| Place of search | Date of completion of the search | Examiner |
|---|---|---|
| THE HAGUE | 20 FEBRUARY 1992 | VAN HUMBEECK F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)